(19) Europäisches Patentamt
European Patent Office
Office européen des brevets

(11) EP 0 667 376 B1

(12) EUROPÄISCHE PATENTSCHRIFT

(45) Veröffentlichungstag und Bekanntmachung des Hinweises auf die Patenterteilung:
**14.11.2001 Patentblatt 2001/46**

(51) Int Cl.$^7$: **C09B 29/036**

(21) Anmeldenummer: **95810071.1**

(22) Anmeldetag: **02.02.1995**

# (54) Phthalimidyl-Azofarbstoffe, Verfahren zu deren Herstellung und deren Verwendung

Phtalimidyl azo dyes, process for their preparation and their use

Colorants phthalimidyliques azoiques, procédé de leur préparation et leur utilisation

(84) Benannte Vertragsstaaten:
**BE CH DE ES FR GB IT LI**

(30) Priorität: **11.02.1994 CH 41394**

(43) Veröffentlichungstag der Anmeldung:
**16.08.1995 Patentblatt 1995/33**

(73) Patentinhaber: **Ciba Specialty Chemicals Holding Inc.**
**4057 Basel (CH)**

(72) Erfinder:
- **Herzig, Paul**
  **CH-4057 Basel (CH)**
- **Dreier, Romeo**
  **CH-4232 Fehren (CH)**

(56) Entgegenhaltungen:
**EP-A- 0 443 984** **EP-A- 0 623 654**
**US-A- 4 039 522** **US-A- 4 324 719**

- **JOURNAL OF THE SOCIETY OF DYERS AND COLOURISTS, Bd.97, Nr.2, Februar 1981, BRADFORD,YORKSHIRE;GB Seiten 72 - 75 J. SZADOWSKI ET. AL. 'Physico-chemical and Dyeing Properties of Disperse Dyes containing Phthalimide Residues'**
- **JOURNAL OF THE SOCIETY OF DYERS AND COLOURISTS, Bd.97, Nr.8, August 1981, BRADFORD, YORKSHIRE,GB Seiten 358 - 362 J. SZADOWSKI ET. AL. 'Properties of Monoazo Disperse Dyes'**
- **JOURNAL OF THE SOCIETY OF DYERS AND COLOURISTS, Bd.101, März 1985, BRADFORD, YORKSHIRE; GB Seiten 105 - 108 J. SZADOWSKI ET. AL. 'Synthesis and Properties of Amide Derivatives of...'**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Gegenstand der vorliegenden Erfindung sind Dispersionsazofarbstoffe mit einer N-Methyl-phthalimid-Diazokomponente und einer Anilin-Kupplungskomponente, Verfahren zur Herstellung dieser Farbstoffe und ihre Verwendung zum Färben von Textilmaterialien, insbesondere Polyester.

Dispersionsazofarbstoffe mit einer N-Alkyl-phthalimid-Diazokomponente und einer Anilin-Kupplungskomponente sind zum Teil bekannt.

So sind aus dem Journal of the Society of Dyers and Colourists, 97(2), S. 72-75 und 97(8), S. 358-362 Phthalimidylazofarbstoffe mit einer unsubstituierten Anilinkupplungskomponente bekannt.

US-A-4,039,522 beschreibt spezifische Farbstoffe, welche an dem Stickstoffatom der Phthalimidyldiazokomponente kein Methylsubstituent tragen.

Diese Farbstoffe erfüllen jedoch nicht in allen Fällen die heutige Bedürfnisse, wie z.B. Thermomigrier-, Licht- oder Waschechtheiten.

Aufgabe der vorliegenden Erfindung ist es, Dispersionsazofarbstoffe zu finden, die den heutigen Bedürfnissen entsprechen.

Ueberraschenderweise erfüllen die erfindungsgemässen Dispersionsazofarbstoffe der Formel (1) die genannten Anforderungen.

Die erfindungsgemässen Dispersionsazofarbstoffe entsprechen der Formel

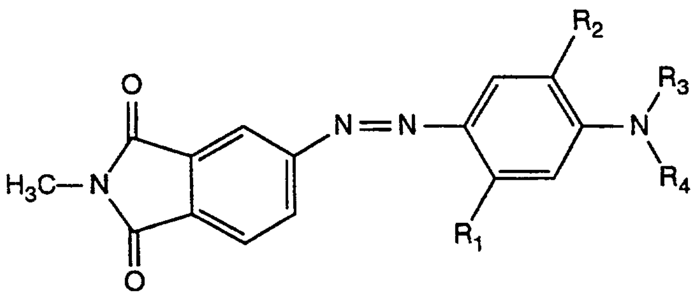

(1)

worin

- $R_1$ Methyl oder NH-CO-$R_5$';
- $R_2$ Wasserstoff, Halogen, $C_1$-$C_4$-Alkyl, gegebenenfalls durch Halogen, Cyano, Phenyl, -Y-$C_1$-$C_8$-Alkyl oder -Y-Phenyl substituiertes $C_1$-$C_8$-Alkoxy;
- $R_3$ gegebenenfalls durch Hydroxy, Cyano, Vinyl, Phenyl, Halogen, -X-Phenyl oder -X-$C_1$-$C_8$-Alkyl substituiertes $C_1$-$C_8$-Alkyl, wobei -X-$C_1$-$C_8$-Alkyl durch Halogen oder Cyano substituiert sein kann und -X-Phenyl durch $C_1$-$C_4$-Alkyl, $C_1$-$C_4$-Alkoxy oder Halogen substituiert sein kann;
- $R_4$ Wasserstoff oder unabhängig von $R_3$ die Bedeutung von $R_3$, wobei $R_3$ und $R_4$ zusammen mit dem sie verbindenden Stickstoffatom auch einen heterocyclischen Rest darstellen können;
- $R_5$' $C_1$-$C_3$-Alkyl oder $C_1$-$C_3$-Alkyl das durch Chlor oder Cyano substituiert ist;
- $R_6$ gegebenenfalls durch Halogen, Cyano oder Phenyl substituiertes $C_1$-$C_4$-Alkyl, wobei Phenyl gegebenenfalls durch $C_1$-$C_4$-Alkyl, $C_1$-$C_4$-Alkoxy oder Halogen substituiert sein kann;
- Y ein Brückenglied der Formel -O-, -S- oder -$SO_2$-; und
- X ein Brückenglied der Formel -O-,

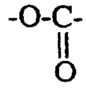 , 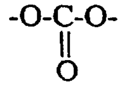 , 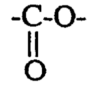 oder 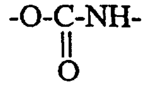

ist.

Bedeuten $R_2$, $R_3$, $R_5$ oder $R_6$ einen unsubstituierten Alkylrest, so kann dieser ab $C_3$ geradkettig oder verzweigt sein. Entsprechend der Zahl der Kohlenstoffatome kommen z.B. in Betracht Methyl, Ethyl, n- oder iso-Propyl, n-, iso-, sec- oder tert.-Butyl, geradkettiges oder verzweigtes Pentyl, Hexyl, Heptyl oder Octyl.

Bevorzugt sind Alkylreste mit 1 bis 4 C-Atomen, insbesondere Methyl oder Ethyl.

Stellt $R_2$ einen durch Halogen, Cyano, Phenyl, -Y-$C_1$-$C_8$-Alkyl oder -Y-Phenyl substituierten $C_1$-$C_8$-Alkoxyrest

dar, so kann dieser $C_1$-$C_8$-Alkoxyrest ebenso wie der -Y-$C_1$-$C_8$-Alkylrest geradkettig, oder ab $C_3$ verzweigt sein. In Frage kommen für die Alkylreste z.B. Methyl, Ethyl, n- oder iso-Propyl, n-, iso-, sec- oder tert.-Butyl, geradkettiges oder verzweigtes Pentyl, Hexyl, Heptyl oder Octyl und für die Alkoxyreste Methoxy, Ethoxy, geradkettiges oder verzweigtes Propoxy, Butoxy, Pentoxy, Hexoxy, Heptoxy oder Octoxy.

Stellen $R_3$ oder $R_4$ einen durch Hydroxy, Cyano, Vinyl, Phenyl, Halogen, -X-$C_1$-$C_8$-Alkyl oder -X-Phenyl substituierten $C_1$-$C_8$-Alkylrest dar, so kann dieser $C_1$-$C_8$-Alkylrest ebenso wie der -X-$C_1$-$C_8$-Alkylrest geradkettig oder ab $C_3$ verzweigt sein. In Frage kommen die vorstehend aufgeführten Alkylreste.

Bevorzugt für $R_3$ und $R_4$ werden $C_1$-$C_4$-Alkylreste, die durch Hydroxy, Chlor oder einen -X-$C_1$-$C_4$-Alkylrest substituiert sind, wobei X ein Brückenglied der Formel -O-,

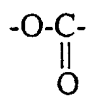 , 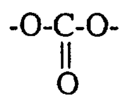 oder 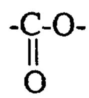

bedeutet. Besonders bevorzugte Brückenglieder X entsprechen der Formel

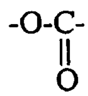 oder 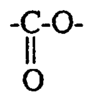 .

$R_3$ und $R_4$ können auch zusammen mit dem sie verbindenden Stickstoffatom einen heterocyclischen Rest darstellen, beispielsweise einen Pyrrolidin-, Piperidin-, Morpholin- oder Piperazinrest.

Stellt $R_5$' einen durch Chlor oder Cyano substituierten $C_1$-$C_3$-Alkylrest dar, so kann dieser $C_1$-$C_3$-Alkylrest geradkettig oder bei $C_3$ verzweigt sein. In Frage kommen die vorstehend aufgeführten Alkylreste.

Stellt $R_6$ einen durch Halogen, Cyano oder Phenyl substituierten $C_1$- $C_4$-Alkylrest dar, so kann dieser $C_1$- $C_4$-Alkylrest geradkettig oder ab $C_3$ verzweigt sein. In Frage kommen die vorstehend aufgeführten Alkylreste.

Halogen bedeutet z.B. Fluor, Brom oder vor allem Chlor.

Die Reste $R_2$, $R_3$, $R_4$, $R_5$ und $R_6$ können ein- oder mehrfach durch die angegebenen Substituenten substituiert sein.

Beispiele für substituierte $R_2$-Reste sind Chlorethoxy, Cyanoethoxy oder 2-Ethoxyethoxy.

Beispiele für substituierte $R_3$- oder $R_4$-Reste sind Hydroxyethyl, Hydroxypropyl, Chlorethyl, 2-Hydroxy-3-Chlorpropyl, Allyl, Cyanoethyl, Chlorethylcarbonyloxyethyl, Methoxyethyl, Ethoxypropyl, Methoxycarbonylethyl, Ethoxycarbonylethyl, Acetoxyethyl, Propionyloxyethyl, Methoxycarbonyloxyethyl, Ethoxycarbonyloxyethyl, Butylaminocarbonyloxyethyl oder Chlorethylaminocarbonyloxyethyl.

Beispiele für substituierte $R_5$'-Reste sind Chlorethyl oder Cyanoethyl.

Beispiele für substituierte $R_6$-Reste sind Chlorethyl, Cyanoethyl oder Benzyl.

Besonders geeignete erfindungsgemässe Farbstoffe entsprechen der Formel (1), worin

$R_2$ Wasserstoff, Chlor, Methyl oder Methoxy ist;
oder
$R_3$ einen gegebenenfalls durch Hydroxy, Chlor, Cyano, Phenyl oder

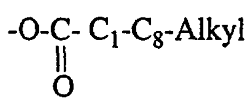

substituiertes $C_1$-$C_4$-Alkylrest bedeutet, wobei

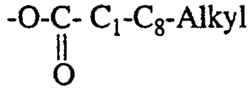

durch Chlor substituiert ist;
oder
$R_4$ Wasserstoff oder einen gegebenenfalls durch Hydroxy, Chlor, Cyano,

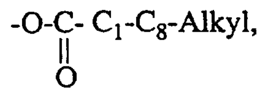

oder Phenyl substituiertes $C_1$-$C_4$-Alkylrest bedeutet.

Weitere besonders geeignete erfindungsgemässe Farbstoffe entsprechender Formel (1), worin $R_1$ Methyl, NH-CO-$CH_3$, NH-CO-$CH_2$-$CH_3$ oder NH-CO-$CH_2$-$CH_2$Cl ist; $R_2$ Wasserstoff, Methyl, Methoxy oder Chlor ist; $R_3$ Methyl, Ethyl, Propyl, $CH_2$-$CH_2$-CN, $CH_2$-$CH_2$-OH, $CH_2$-$CH_2$Cl, $CH_2$-$C_6H_5$, $CH_2$-CH(OH)-$CH_3$, $CH_2$-CH=$CH_2$, $CH_2$-CH(OH)-$CH_2$Cl, $CH_2$-$CH_2$-O-CO-$CH_3$, $CH_2$-$CH_2$-O-CO-$CH_2$-$CH_2$Cl,

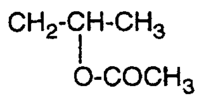 oder 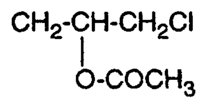

ist; und $R_4$ Wasserstoff, Ethyl, Propyl, $CH_2$-$CH_2$-CN, $CH_2$-$CH_2$-OH, $CH_2$-$CH_2$-O-CO-$CH_3$ oder $CH_2$-$C_6H_5$ ist.

Besonders bevorzugt für $R_3$ sind Methyl, Ethyl oder durch Cyano oder Phenyl substituiertes $C_1$-$C_4$-Alkyl.

Besonders bevorzugt für $R_4$ sind Methyl, Ethyl oder durch Cyano oder Phenyl substituiertes $C_1$-$C_4$-Alkyl.

Eine besonders bevorzugte Ausführungsform der Erfindung stellen Azofarbstoffe der Formeln

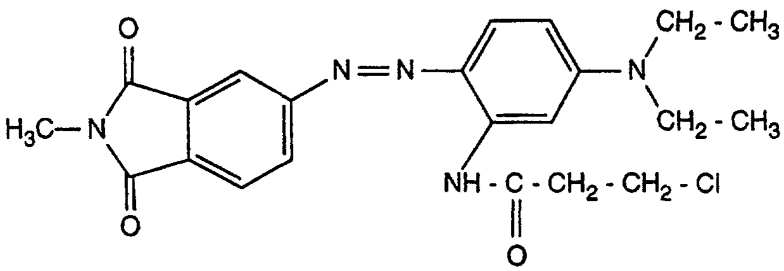 (4)

und

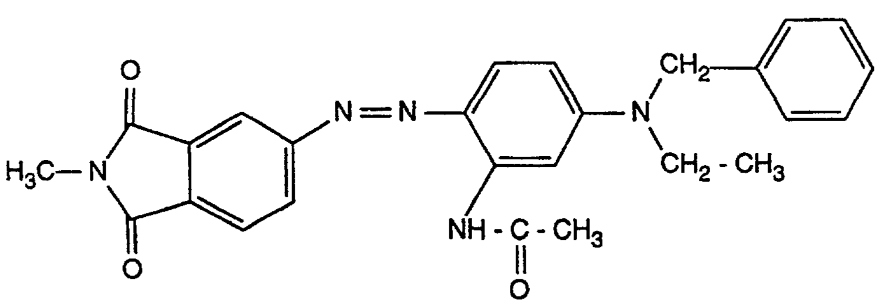 (5)

dar.

Gegenstand der vorliegenden Anmeldung ist ferner ein Verfahren zur Herstellung der erfindungsgemässen Farbstoffe. Das Verfahren ist dadurch gekennzeichnet, dass man ein Phthalimid der Formel

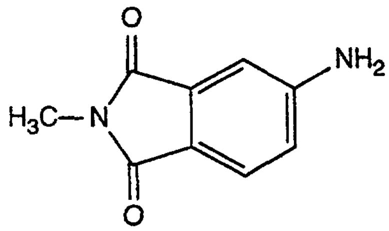

(6)

diazotiert und anschliessend auf eine Kupplungskomponente der Formel

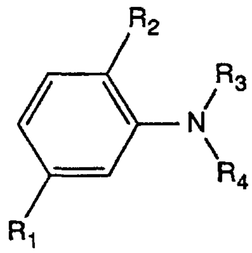

(7)

kuppelt, wobei $R_1$, $R_2$, $R_3$ und $R_4$ die unter der Formel (1) angegebene Bedeutung aufweisen.

Die Verbindungen der Formel (6) und (7) sind bekannt oder können auf an sich bekannte Art hergestellt werden, und die Diazotierung und Kupplung erfolgen auf übliche Weise.

Farbstoffe der Formel (1), bei denen $R_2$ oder $R_3$ einen Rest der Formel -Alkylen-X-Alkyl bedeutet, können auch hergestellt werden, indem man zunächst einen Farbstoff, enthaltend eine Vorstufe dieser Reste, z.B. eine Hydroxyalkylgruppe, herstellt und anschliessend diese Gruppe in einen Rest der Formel -Alkylen-X-Alkyl überführt.

Die erfindungsgemässen Verbindungen der Formel (1) können als Farbstoffe zum Färben und Bedrucken von halbsynthetischen und insbesondere synthetischen hydrophoben Fasermaterialien, vor allem Textilmaterialien, verwendet werden. Textilmaterialien aus Mischgeweben, die derartige halbsynthetische bzw. synthetische hydrophobe Textilmaterialien enthalten, können ebenfalls mit Hilfe der erfindungsgemässen Verbindungen gefärbt oder bedruckt werden.

Als halbsynthetische Textilmaterialien kommen vor allem Cellulose 2½-Acetat und Cellulosetriacetat in Frage.

Synthetische hydrophobe Textilmaterialien bestehen vor allem aus linearen, aromatischen Polyestem, beispielsweise solchen aus Terephthalsäure und Glykolen, besonders Ethylenglykol oder Kondensationsprodukten aus Terephthalsäure und 1,4-Bis-(hydroxymethyl)cyclohexan; aus Polycarbonaten, z.B. solchen aus α,α-Dimethyl-4,4'-dihydroxy-diphenylmethan und Phosgen, aus Fasern auf Polyvinylchlorid- sowie Polyamid-Basis.

Die Applikation der erfindungsgemässen Verbindungen auf die Textilmaterialien erfolgt nach bekannten Färbeverfahren. Beispielsweise färbt man Polyesterfasermaterialien im Ausziehverfahren aus wässriger Dispersion in Gegenwart von üblichen anionischen oder nicht-ionischen Dispergiermitteln und gegebenenfalls üblichen Quellmitteln (Carrier) bei Temperaturen zwischen 80 und 140°C. Cellulose-2½-acetat färbt man vorzugsweise zwischen ungefähr 65 bis 85°C und Cellulosetriacetat bei Temperaturen bis zu 115°C.

Die neuen Farbstoffe färben im Färbebad gleichzeitig anwesende Wolle und Baumwolle nicht oder nur wenig an (sehr gute Reserve), so dass sie auch gut zum Färben von Polyester/Wolle- und Polyester/Cellulosefaser-Mischgeweben verwendet werden können.

Die erfindungsgemässen Farbstoffe eignen sich zum Färben nach dem Thermosol-Verfahren, im Ausziehverfahren und für Druckverfahren.

Das genannte Textilmaterial kann dabei in den verschiedenen Verarbeitungsformen vorliegen, wie z.B. als Faser, Faden oder Vlies, als Gewebe oder Gewirke.

Es ist vorteilhaft, die erfindungsgemässen Farbstoffe vor ihrer Verwendung in ein Farbstoffpräparat zu überführen. Hierzu wird der Farbstoff vermahlen, so dass seine Teilchengrösse im Mittel zwischen 0,1 und 10 Mikron beträgt. Das Vermahlen kann in Gegenwart von Dispergiermitteln erfolgen. Beispielsweise wird der getrocknete Farbstoff mit einem Dispergiermittel gemahlen oder in Pastenform mit einem Dispergiermittel geknetet und hierauf im Vakuum oder durch Zerstäuben getrocknet. Mit den so erhaltenen Präparaten kann man nach Zugabe von Wasser Druckpasten und Färbebäder herstellen.

Beim Bedrucken wird man die üblichen Verdickungsmittel verwenden, z.B. modifizierte oder nichtmodifizierte natürliche Produkte, beispielsweise Alginate, British-Gummi, Gummi arabicum, Kristallgummi, Johannisbrotkernmehl,

Tragant, Carboxymethylcellulose, Hydroxyethylcellulose, Stärke oder synthetische Produkte, beispielsweise Polyacrylamide, Polyacrylsäure oder deren Copolymere oder Polyvinylalkohole.

Die erfindungsgemässen Farbstoffe verleihen den genannten Materialien, vor allem dem Polyestermaterial, egale gelbe bis violette Farbtöne von sehr guten Gebrauchs-Echtheiten, wie vor allem guter Lichtechtheit, Thermofixier-, Plissier-, Chlor- und Nassechtheit wie Wasser-, Schweiss- und Waschechtheit; die Ausfärbungen sind ferner gekennzeichnet durch sehr gute Reibechtheit. Besonders hervorzuheben ist die gute Thermomigrierechtheit der erhaltenen Färbungen.

Die erfindungsgemässen Farbstoffe können auch gut verwendet werden zur Herstellung von Mischnuancen zusammen mit anderen Farbstoffen. Selbstverständlich können auch Mischungen der erfindungsgemässen Farbstoffe untereinander verwendet werden.

Die vorstehend genannte Verwendung der erfindungsgemässen Azoverbindungen der Formel (1) stellt ebenso einen Gegenstand der vorliegenden Erfindung dar wie ein Verfahren zum Färben oder Bedrucken von halb-synthetischem oder synthetischem hydrophobem Fasermaterial, insbesondere Textilmaterial, das darin besteht, eine oder mehrere Verbindungen der Formel (1) auf das genannte Material aufzubringen oder es in dieses einzuarbeiten. Das genannte hydrophobe Fasermaterial ist vorzugsweise textiles Polyestermaterial. Weitere Substrate, die durch das erfindungsgemässe Verfahren behandelt werden können sowie bevorzugte Verfahrensbedingungen sind vorstehend bei der näheren Erläuterung der Verwendung der erfindungsgemässen Verbindungen zu finden.

Ein weiterer Gegenstand der Erfindung ist das durch das genannte Verfahren gefärbte bzw. bedruckte hydrophobe Fasermaterial, vorzugsweise Polyester-Textilmaterial.

Die erfindungsgemässen Farbstoffe der Formel (1) eignen sich ausserdem für moderne Aufzeichnungsverfahren, wie z.B. Thermotransfer-Printing.

Die folgenden Beispiele veranschaulichen die Erfindung weiter. Teile und Prozente beziehen sich, sofern nicht anders angegeben, auf das Gewicht. Die Temperaturgrade beziehen sich, sofern nicht anders angegeben, auf Grade Celsius.

<u>Beispiel 1:</u>

Zu 80 Teilen eines Säuregemisches, bestehend aus einem Volumenteil Propionsäure und 5 Volumenteilen Essigsäure werden 30 Teile einer 98%igen Schwefelsäure unterhalb 20° C zugetropft. Zu dieser Lösung tropft man unterhalb 15° C 17,4 Teile einer 40%igen Nitrosylschwefelsäure zu. Danach kühlt man auf 0-5° C ab.
Nun werden innerhalb 30 Min. 8,8 Teile 4-Amino-N-methyl-phthalimid eingetragen. Daraufhin gibt man nochmals 50 Teile eines Säuregemisches bestehend aus einem Volumenteil Propionsäure und 5 Volumenteilen Essigsäure zu. Die Reaktionsmischung wird 2 Std. bei 0-5° C verrührt. Nach beendeter Diazotierung gibt man 1 Teil Harnstoff zu und verrührt nochmals 15 Minuten.

10,5 Teile der Kupplungskomponente 3-Acetamino-N-ethyl-N-benzyl-anilin werden in 50 Teilen eines aus einem Volumenteil Propionsäure und 5 Volumenteilen Essigsäure bestehenden Säuregemisches gelöst. Zur Senkung der Temperatur gibt man noch 30 Teile Eis zu.

Zu dieser Lösung lässt man nun die Diazotierungsmasse zulaufen. Nach 30 Min. rühren wird mit NaOH 30% auf einen pH Wert von 1 gestellt. Nach weiteren 60 Min. auf pH 4,5. Anschliessend wird der Azofarbstoff mit Wasser vollständig ausgefällt, abfiltriert, mit Wasser gewaschen und getrocknet.

Man erhält 20 Teile eines Azofarbstoffes der Formel:

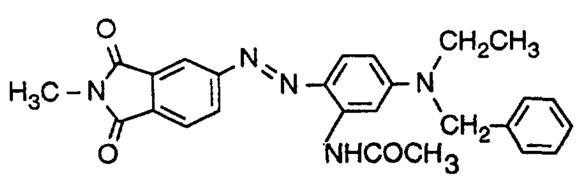

Er färbt Polyester in einem scharlachroten Ton.

Der Farbstoff kann beispielsweise durch anschlämmen in heissem Ethanol, abkühlen, filtrieren und waschen mit Ethanol weiter gereinigt werden.

Analog oben beschriebenem Verfahren können anstelle von 3-Acetamino-N-ethyl-N-benzyl-anilin auch die in der Tabelle 1 aufgeführten Kupplungskomponenten verwendet werden.

Tabelle 1:

| Bsp. | Kupplungskomponente: | Nuance |
|---|---|---|
| 2 | 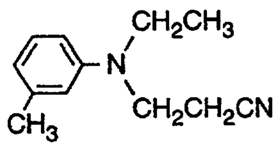 | Brillantorange |
| 3 | 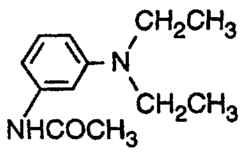 | Scharlach |
| 4 | 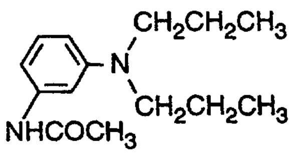 | Scharlach |
| 5 | 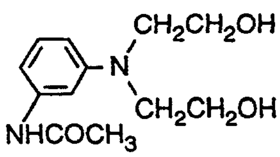 | Rot |

| | | |
|---|---|---|
| 6 | 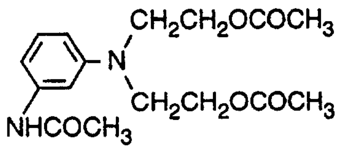 | Orange |
| 7 | 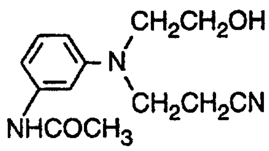 | Orange |
| 8 | 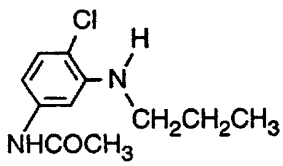 | Brillantorange |
| 9 | 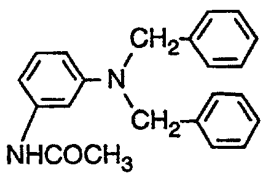 | Orange |
| 10 | 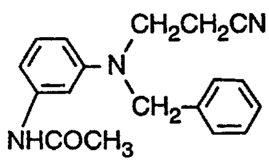 | Orange |
| 11 | 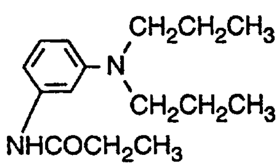 | Scharlach |
| 12 | 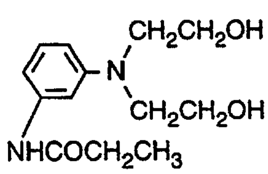 | Rot |

| | | |
|---|---|---|
| 13 | 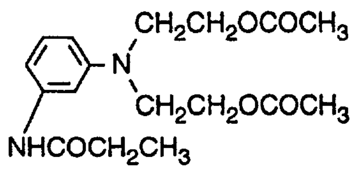 | Orange |
| 14 | 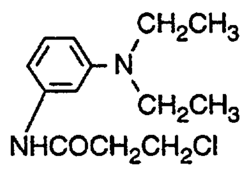 | Scharlach |
| 15 | 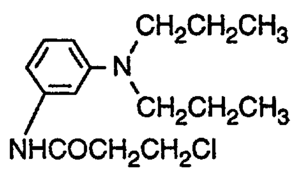 | Scharlach |
| 16 | 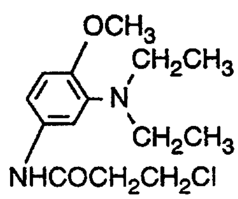 | Rubin |
| 17 | 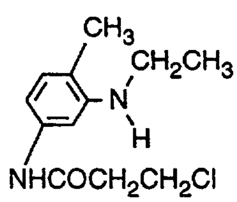 | Scharlach |
| 18 | 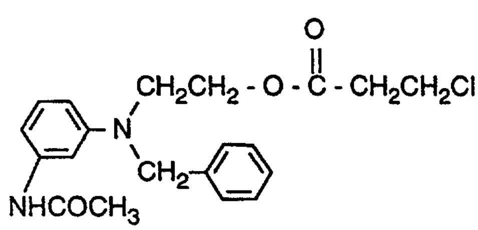 | Orange |
| 19 | 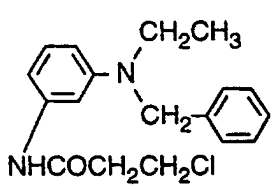 | Scharlach |

20 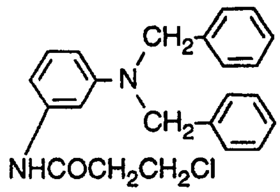 Orange

21 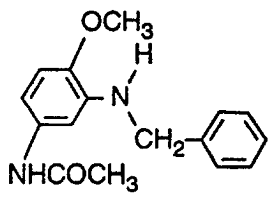 Brillantorange

22 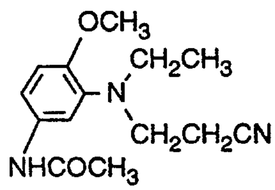 Rot

23 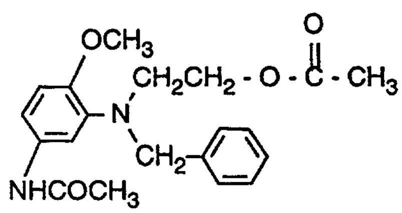 Rot

24 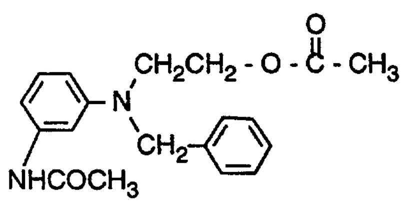 Orange

25 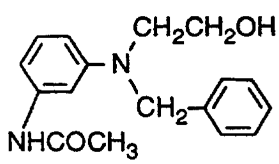 Scharlach

26 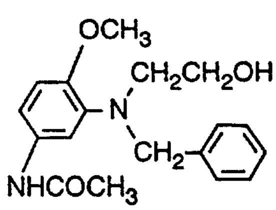 Rot

| | | |
|---|---|---|
| 27 | 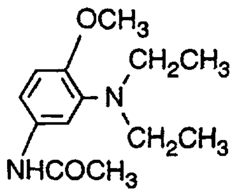 | Rubin |
| 28 | 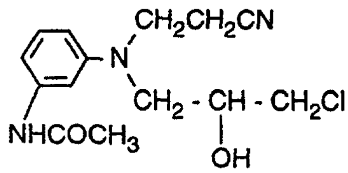 | Orange |
| 29 | 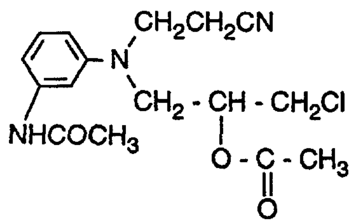 | Orange |
| 30 | 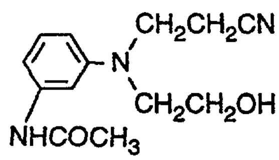 | Orange |
| 31 | 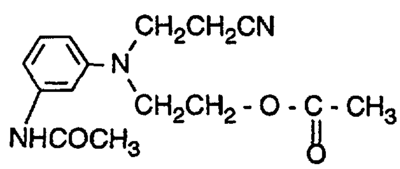 | Orange |
| 32 | 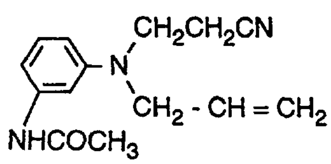 | Orange |
| 33 | 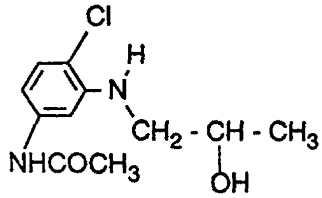 | Orange |

34 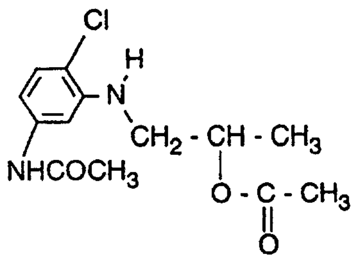 Orange

35 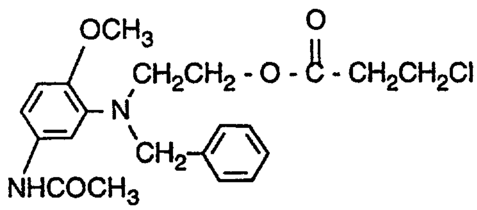 Rot

Beispiel 36:

1 g des im Beispiel 1 beschriebenen Farbstoffes wird zusammen mit 17 g Wasser und 2 g eines handelsüblichen Dispergators vom Typ Dinaphthylmethandisulfonat in einer Sandmühle gemahlen und in eine 5%-ige wässrige Dispersion überführt. Mit dieser Formulierung wird im Hochtemperatur-Ausziehverfahren bei 130° C eine 1%-ige Färbung (bezogen auf Pigment und Substrat) auf Polyestergewebe erstellt und reduktiv gereinigt. Die so erzielte scharlachrote Färbung weist sehr gute Gebrauchsechtheiten und insbesondere eine ausgezeichnete Thermomigrationsechtheit auf.

Diesselben guten Echtheiten lassen sich erzielen, wenn damit Polyestergewebe im Thermosolverfahren gefärbt wird (10 g/l Farbstoff, Flottenaufnahme 50%, Fixiertemperatur 210° C).

Zur Prüfung der Thermomigrationsechtheit wird das gefärbte Gewebe mit einem Textilweichmacher vom Typ Distearyl-diethylentriamin ausgerüstet und anschliessend während 40 Sekunden auf 165° C erhitzt. Danach werden Reibechtheit und Waschechtheit (60° C) der Probe geprüft.

**Patentansprüche**

**1.** Dispersionsazofarbstoffe der Formel

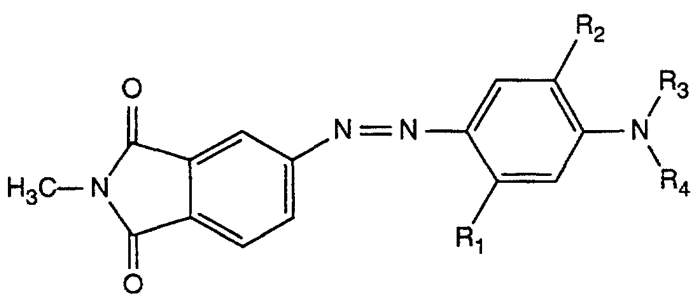 (1)

worin

$R_1$ Methyl oder NH-CO-$R_5$';

$R_2$ Wasserstoff, Halogen, $C_1$-$C_4$-Alkyl, gegebenenfalls durch Halogen, Cyano, Phenyl, -Y-$C_1$-$C_8$-Alkyl oder -Y-Phenyl substituiertes $C_1$-$C_8$-Alkoxy;

$R_3$ gegebenenfalls durch Hydroxy, Cyano, Vinyl, Phenyl, Halogen, -X-Phenyl oder -X-$C_1$-$C_8$-Alkyl substituiertes $C_1$-$C_8$-Alkyl, wobei -X-$C_1$-$C_8$-Alkyl durch Halogen oder Cyano substituiert sein kann und -X-Phenyl durch $C_1$-$C_4$-Alkyl, $C_1$-$C_4$-Alkoxy oder Halogen substituiert sein kann;

$R_4$ Wasserstoff oder unabhängig von $R_3$ die Bedeutung von $R_3$, wobei $R_3$ und $R_4$ zusammen mit dem sie verbindenden Stickstoffatom auch einen heterocyclischen Rest darstellen können;

$R_5$' ' $C_1$-$C_3$-Alkyl oder $C_1$-$C_3$-Alkyl das durch Chlor oder Cyano substituiert ist;

$R_6$ gegebenenfalls durch Halogen, Cyano oder Phenyl substituiertes $C_1$-$C_4$-Alkyl, wobei Phenyl gegebenenfalls durch $C_1$-$C_4$-Alkyl, $C_1$-$C_4$-Alkoxy oder Halogen substituiert sein kann;

Y ein Brückenglied der Formel -O-, -S- oder -SO2-; und

X ein Brückenglied der Formel -O-,

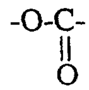 , 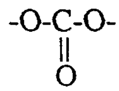 , 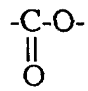 oder 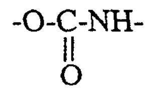

ist.

**2.** Dispersionsazofarbstoffe gemäss Anspruch 1, worin $R_2$ Wasserstoff, Chlor, Methyl oder Methoxy ist.

**3.** Dispersionsazofarbstoffe gemäss einem der Ansprüche 1 und 2, worin $R_3$ einen gegebenenfalls durch Hydroxy, Halogen, Cyano, Phenyl oder

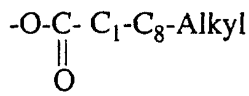

substituiertes $C_1$-$C_4$-Alkylrest bedeutet, wobei

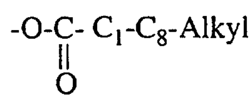

durch Chlor substituiert ist.

**4.** Dispersionsazofarbstoffe gemäss einem der Ansprüche 1 bis 3, worin $R_4$ Wasserstoff oder einen gegebenenfalls durch Hydroxy, Chlor, Cyano,

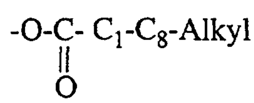

oder Phenyl substituiertes $C_1$-$C_4$-Alkylrest bedeutet.

**5.** Dispersionsazofarbstoffe gemäss einem der Ansprüche 1 bis 4, worin $R_3$ Methyl, Ethyl, oder $C_1$-$C_4$-Alkyl bedeutet, das durch Cyano oder Phenyl substituiert ist.

**6.** Dispersionsazofarbstoffe gemäss einem der Ansprüche 1 bis 5, worin $R_4$ Methyl, Ethyl oder $C_1$-$C_4$-Alkyl bedeutet, das durch Cyano oder Phenyl substituiert ist.

**7.** Dispersionsazofarbstoffe gemäss Anspruch 1, worin $R_1$ Methyl, NH-CO-$CH_3$, NH-CO-$CH_2$-$CH_3$ oder NH-CO-$CH_2$-$CH_2$Cl ist; $R_2$ Wasserstoff, Methyl, Methoxy oder Chlor ist; $R_3$ Methyl, Ethyl, Propyl, $CH_2$-$CH_2$-CN, $CH_2$-$CH_2$-OH, $CH_2$-$CH_2$Cl, $CH_2$-$C_6H_5$, $CH_2$-CH(OH)-$CH_3$, $CH_2$-CH=$CH_2$, $CH_2$-CH(OH)-$CH_2$Cl, $CH_2$-$CH_2$-O-CO-$CH_3$, $CH_2$-$CH_2$-O-CO-$CH_2$-$CH_2$Cl,

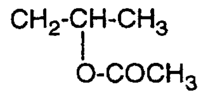 oder 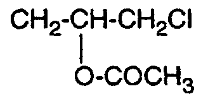

ist; und $R_4$ Wasserstoff, Ethyl, Propyl, $CH_2$-$CH_2$-CN, $CH_2$-$CH_2$-OH, $CH_2$-$CH_2$-O-CO-$CH_3$ oder $CH_2$-$C_6H_5$ ist.

**8.** Dispersionsazofarbstoff gemäss einem der Ansprüche 1 bis 7 der Formel

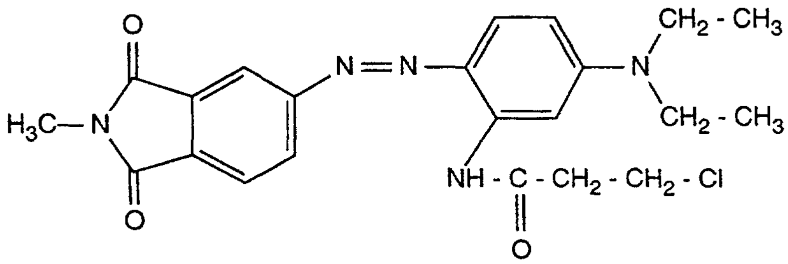

(4)

**9.** Dispersionsazofarbstoff gemäss einem der Ansprüche 1 bis 7 der Formel

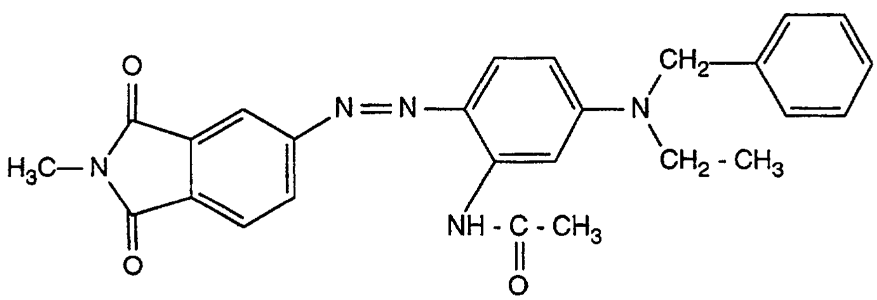

(5)

**10.** Verfahren zur Herstellung der Dispersionsazofarbstoffe der Formel (1) gemäss Anspruch 1, **dadurch gekennzeichnet, dass** man ein Phthalimid der Formel

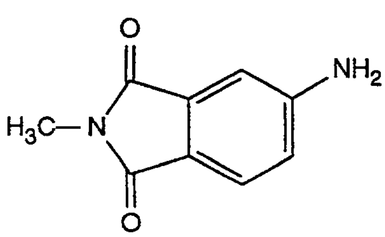

(6)

diazotiert und anschliessend auf eine Kupplungskomponente der Formel

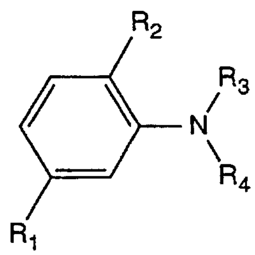

(7)

kuppelt, wobei
$R_1$, $R_2$, $R_3$ und $R_4$ die in Anspruch 1 angegebene Bedeutungen haben.

**11.** Verwendung der Dispersionsfarbstoffe gemäss Anspruch 1 zum Färben oder Bedrucken von halbsynthetischem oder synthetischem hydrophobem Fasermaterial, insbesondere Textilmaterial.

**12.** Verwendung nach Anspruch 11 zum Färben oder Bedrucken von Textilmaterial aus Polyesterfasern.

**13.** Verfahren zum Färben oder Bedrucken von halbsynthetischem oder synthetischem hydrophobem Fasermaterial, insbesondere Textilmaterial, **dadurch gekennzeichnet, dass** man eine oder mehrere der im Anspruch 1 definierten Verbindungen auf das genannte Material aufbringt oder diesem einverleibt.

**14.** Verfahren nach Anspruch 13, worin das hydrophobe Fasermaterial, vorzugsweise Textilmaterial, aus Polyesterfasern besteht.

**15.** Das gemäss Anspruch 13 oder 14 gefärbte oder bedruckte Material.

## Claims

**1.** A disperse azo dye of formula

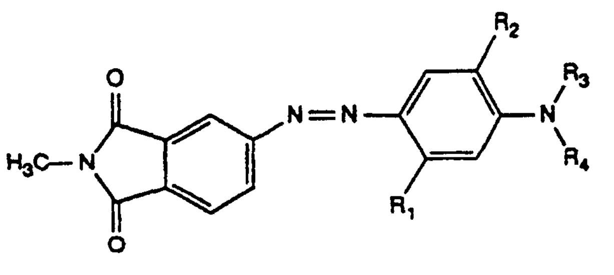

(1)

wherein

$R_1$ is methyl or NH-CO-$R_5$ ;
$R_2$ is hydrogen, halogen, $C_1$-$C_4$alkyl, unsubstituted $C_1$-$C_8$alkoxy or $C_1$-$C_8$alkoxy which is substituted by halogen, cyano, phenyl, -Y-$C_1$-$C_8$alkyl or -Y-phenyl;
$R_3$ is unsubstituted $C_1$-$C_8$alkyl or $C_1$-$C_8$alkyl which is substituted by hydroxy, cyano, vinyl, phenyl, halogen, -X-phenyl or -X-$C_1$-$C_8$alkyl, and -X-$C_1$-$C_8$-alkyl may be substituted by halogen or cyano and -X-phenyl may be substituted by $C_1$-$C_4$alkyl, $C_1$-$C_4$-alkoxy or halogen;
$R_4$ is hydrogen or, independently of $R_3$, has the meaning of $R_3$, and $R_3$ and $R_4$, together with the nitrogen atom linking them, can also be a heterocyclic radical;
$R_5'$ is $C_1$-$C_3$alkyl, or $C_1$-$C_3$alkyl, which is substituted by chloro or cyano;
$R_6$ is unsubstituted $C_1$-$C_4$alkyl or $C_1$-$C_4$alkyl which is substituted by halogen, cyano or phenyl, and phenyl in turn can be unsubstituted or substituted by $C_1$-$C_4$alkyl, $C_1$-$C_4$alkoxy or halogen;
Y is a linking group of formula -O-, -S- or -$SO_2$-; and
X is a linking group of formula

-O-, 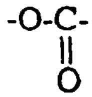 , 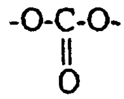 , 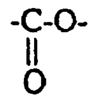 or 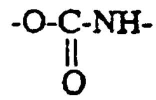

2. A disperse azo dye according to claim 1, wherein $R_2$ is hydrogen, chloro, methyl or methoxy.

3. A disperse azo dye according to one of claims 1 and 2, wherein $R_3$ is an unsubstituted $C_1$-$C_4$alkyl radical or a $C_1$-$C_4$alkyl radical which is substituted by hydroxy, halogen, cyano, phenyl or

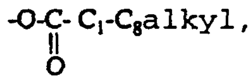

and

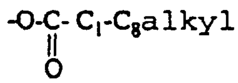

is substituted by chloro.

4. A disperse azo dye according to any one of claims 1 to 3, wherein $R_4$ is hydrogen or an unsubstituted $C_1$-$C_4$alkyl radical or a $C_1$-$C_4$alkyl radical which is substituted by hydroxy, chloro, cyano,

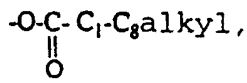

or phenyl.

5. A disperse azo dye according to any one of claims 1 to 4, wherein $R_3$ is methyl, ethyl, or $C_1$-$C_4$alkyl which is substituted by cyano or phenyl.

6. A disperse azo dye according to any one of claims 1 to 5, wherein $R_4$ is methyl, ethyl or $C_1$-$C_4$alkyl which is substituted by cyano or phenyl.

7. A disperse azo dye according to claim 1, wherein $R_1$ is methyl, NH-CO-$CH_3$, NH-CO-$CH_2$-$CH_3$, or NH-CO-$CH_2$-$CH_2Cl$; $R_2$ is hydrogen, methyl, methoxy or chloro; $R_3$ is methyl, ethyl, propyl, $CH_2$-$CH_2$-CN, $CH_2$-$CH_2$-OH, $CH_2$-$CH_2Cl$, $CH_2$-$C_6H_5$, $CH_2$-CH (OH) -$CH_3$, $CH_2$-CH=$CH_2$, $CH_2$-CH (OH) -$CH_2Cl$, $CH_2$-$CH_2$-O-CO-$CH_3$, $CH_2$-$CH_2$-O-CO-$CH_2$-$CH_2Cl$,

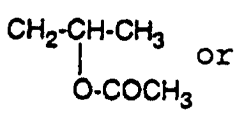 or 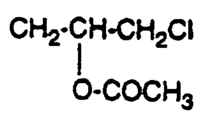 ;

and $R_4$ is hydrogen, ethyl, propyl, $CH_2$-$CH_2$-CN, $CH_2$-$CH_2$-OH, $CH_2$-$CH_2$-O-CO-$CH_3$ or $CH_2$-$C_6H_5$.

8. A disperse azo dye according to any one of claims 1 to 7, of formua

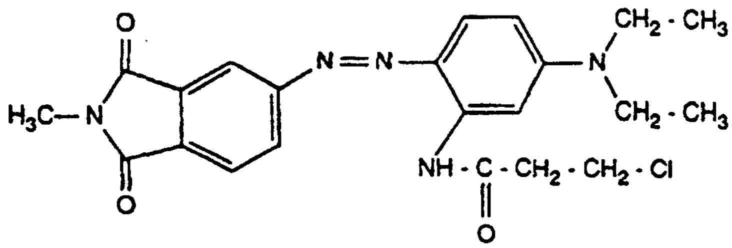

(4)

**9.** A disperse azo dye according to any one of claims 1 to 7, of formula

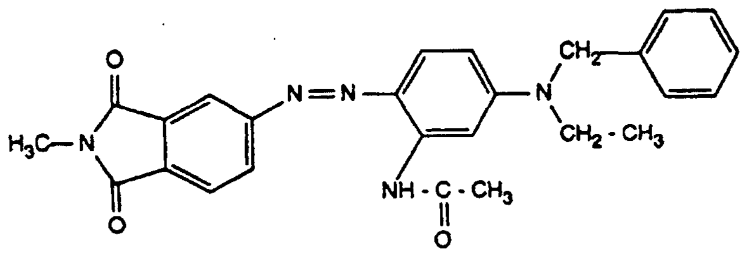

(5)

**10.** A process for the preparation of a disperse azo dye of formula (1) according to claim 1, which comprises diazotising a phthalimide of formula

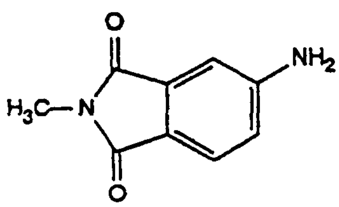

(6)

and coupling the diazonium compound to a coupling component of formula

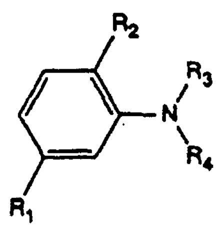

(7)

where
$R_1$, $R_2$, $R_3$ and $R_4$ are as defined in claim 1.

**11.** Use of a disperse dye according to claim 1 for dyeing or printing semisynthetic or synthetic hydrophobic fibre material, especially textile material.

**12.** Use according to claim 11 for dyeing or printing polyester fibre textile material.

**13.** A process for dyeing or printing semisynthetic or synthetic hydrophobic fibre material, especially textile material, which comprises applying to or incorporating in said material one or more than one compound defined in claim 1.

**14.** A process according to claim 13, wherein the hydrophobic fibre material, preferably textile material, consists of

polyester fibres.

**15.** The material dyed or printed according to claim 13 or 14.

**Revendications**

**1.** Colorants azoïques de dispersion de formule

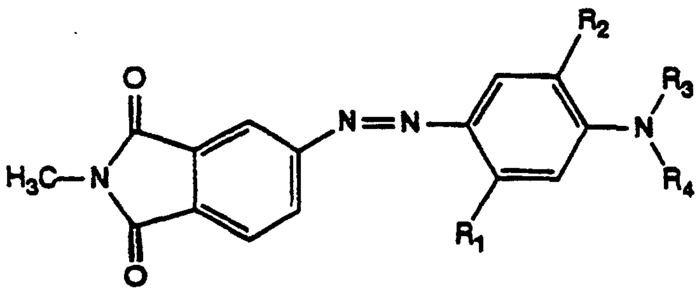

(1)

dans laquelle

- $R_1$ est un reste méthyle ou NH-CO-$R_5$',
- $R_2$ représente un atome d'hydrogène, un halogène, un reste alkyle en $C_1$-$C_4$ ou un reste alcoxy en $C_1$-$C_8$ éventuellement substitué par halogène, cyano, phényle, -Y-alkyle en $C_1$-$C_8$ ou -Y-phényle;
- $R_3$ représente un reste alkyle en $C_1$-$C_8$ éventuellement substitué par hydroxy, cyano, vinyle, phényle, halogène, -X-phényle ou -X-alkyle en $C_1$-$C_8$, le reste-X-alkyle en $C_1$-$C_8$ pouvant être substitué par halogène ou cyano et le reste -X-phényle pouvant être substitué par alkyle en $C_1$-$C_4$, alcoxy en $C_1$-$C_4$ ou halogène;
- $R_4$ représente un atome d'hydrogène ou a indépendamment de $R_3$ la signification de $R_3$, et $R_3$ et $R_4$ peuvent aussi représenter ensemble, avec l'atome d'azote auquel ils sont liés, un reste hétérocyclique;
- $R_5$' représente un reste alkyle en $C_1$-$C_3$ ou un reste alkyle en $C_1$-$C_3$ substitué par chloro ou cyano;
- $R_6$ représente un reste alkyle en $C_1$-$C_4$ éventuellement substitué par halogène, cyano ou phényle, le reste phényle étant éventuellement substitué par alkyle en $C_1$-$C_4$, alcoxy en $C_1$-$C_4$ ou halogène;
- Y représente un pont de formule -O-, -S- ou -$SO_2$-; et
- X représente un pont de formule -O-,

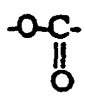 , 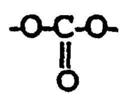 , 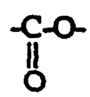 ou 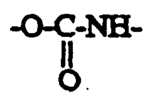.

**2.** Colorants azoïques de dispersion selon la revendication 1, dans lesquels $R_2$ est un atome d'hydrogène ou de chlore ou un reste méthyle ou méthoxy.

**3.** Colorants azoïques de dispersion selon les revendications 1 et 2, dans lesquels $R_3$ est un reste alkyle en $C_1$-$C_4$ éventuellement substitué par hydroxy, halogéno, cyano, phényle ou

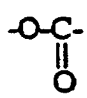 (alkyle en $C_1$-$C_8$),

le reste

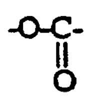 (alkyle en $C_1$-$C_8$),

étant substitué par du chlore.

**4.** Colorants azoïques de dispersion selon l'une des revendications 1 à 3, dans lesquels $R_4$ représente un atome d'hydrogène ou un reste alkyle en $C_1$-$C_4$ éventuellement substitué par hydroxy, chloro, cyano,

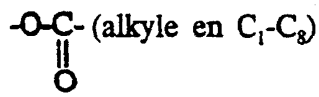

ou phényle.

**5.** Colorants azoïques de dispersion selon l'une des revendications 1 à 4, dans lesquels $R_3$ est un reste méthyle, éthyle ou alkyle en $C_1$-$C_4$ substitué par cyano ou phényle.

**6.** Colorants azoïques de dispersion selon l'une des revendications 1 à 5, dans lesquels $R_4$ est un reste méthyle, éthyle ou alkyle en $C_1$-$C_4$ substitué par cyano ou phényle.

**7.** Colorants azoïques de dispersion selon la revendication 1, dans lesquels $R_1$ est un reste méthyle, NH-CO-$CH_3$, NH-CO-$CH_2$-$CH_3$ ou NH-CO-$CH_2$-$CH_2Cl$; $R_2$ est un atome d'hydrogène ou un reste méthyle, méthoxy ou chloro; $R_3$ est un reste méthyle, éthyle, propyle, $CH_2$-$CH_2$-CN, $CH_2$-$CH_2$-OH, $CH_2$-$CH_2Cl$, $CH_2$-$C_6H_5$, $CH_2$-CH(OH)-$CH_3$, $CH_2$-CH=$CH_2$, $CH_2$-CH(OH)-$CH_2Cl$, $CH_2$-$CH_2$-O-CO-$CH_3$, $CH_2$-$CH_2$-O-CO-$CH_2$-$CH_2Cl$,

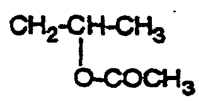 ou 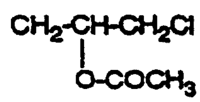 ;

et $R_4$ représente un atome d'hydrogène ou un reste éthyle, propyle, $CH_2$-$CH_2$-CN, $CH_2$-$CH_2$-OH, $CH_2$-$CH_2$-O-CO-$CH_3$ ou $CH_2$-$C_6H_5$.

**8.** Colorant azoïque de dispersion selon l'une des revendications 1 à 7, de formule

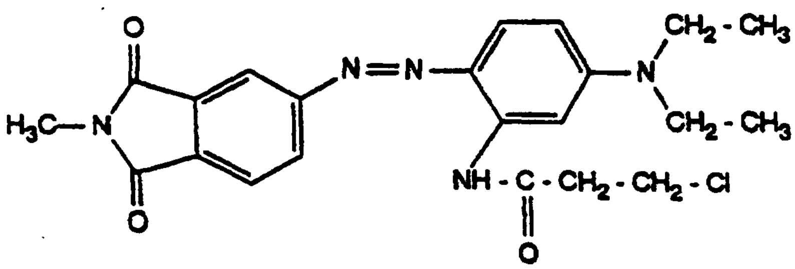

(4) .

**9.** Colorant azoïque de dispersion selon l'une des revendications 1 à 7, de formule

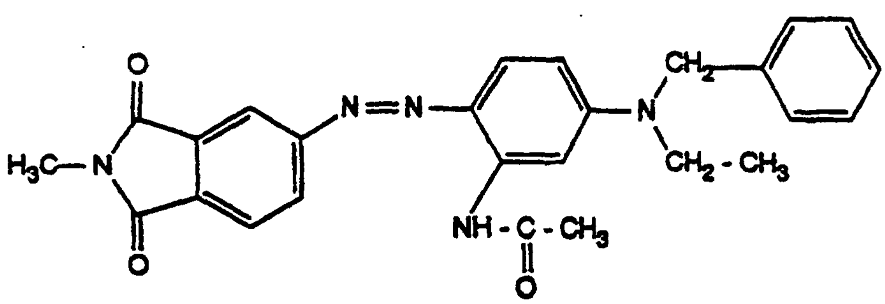

(5)

**10.** Procédé de préparation des colorants azoïques de dispersion de formule (1) selon la revendication 1, **caractérisé en ce que** l'on diazote un phtalimide de formule

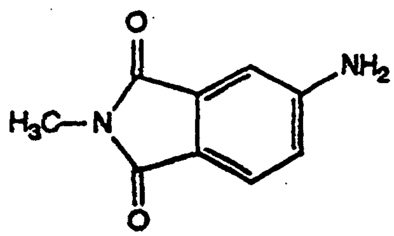

(6),

puis on le soumet à une copulation avec un composant de copulation de formule

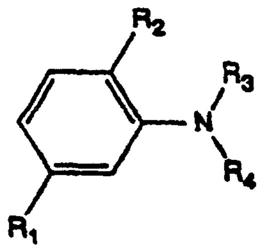

(7)

dans lesquels $R_1$, $R_2$, $R_3$ et $R_4$ ont la définition indiquée dans la revendication 1.

**11.** Utilisation des colorants azoïques de dispersion selon la revendication 1 pour la teinture ou l'impression d'un matériau hydrophobe semi-synthétique ou synthétique, en particulier d'un matériau textile.

**12.** Utilisation selon la revendication 11 pour la teinture ou l'impression d'un matériau textile de fibres de polyester.

**13.** Procédé de teinture ou d'impression d'un matériau hydrophobe semi-synthétique ou synthétique, en particulier d'un matériau textile, **caractérisé en ce que** l'on applique sur ce matériau ou on incorpore dans ce matériau un ou plusieurs des composés définis dans la revendication 1.

**14.** Procédé selon la revendication 13, dans lequel le matériau fibreux hydrophobe, de préférence un matériau textile, est constitué de fibres de polyester.

**15.** Matériau teint ou imprimé selon la revendication 13 ou 14.